# EUROPEAN PATENT APPLICATION

(11) **EP 2 387 222 A2**
(43) Date of publication of application: **16.11.2011**
(21) Application number: 11164726.9
(22) Date of filing: 04.05.2011
(51) Int. Cl.: H04N 1/00, G06F 3/048

(54) **Information processing apparatus, and control method and storage medium therefor**

(30) Priority: 13.05.2010 JP 2010111207
(71) Applicant: Canon Kabushiki Kaisha, Ohta-Ku, Tokyo 146-8501 (JP)
(72) Inventor: Nakashima, Kousuke, Tokyo Tokyo 146-8501 (JP)
(74) Representative: TBK

(57) **Abstract**

An information processing apparatus capable of preventing processing of a job which is in execution from being interrupted, even if a user's screen transition operation is performed while the job is being executed and capable of preventing the job which is being processed from staying in the information processing apparatus. If it is determined that a job is in an in-processing state (YES to S1001) when a user's screen changeover operation is accepted, a browser of the information processing apparatus causes a display unit to display, on the foreground, an operation screen other than an operation screen associated with the job (S1002 to S1005).

## Description

### BACKGROUND OF THE INVENTION

### Field of the Invention

The present invention relates to an information processing apparatus in which operation screens provided by a server are selectively displayed on a display unit, and relates to a control method and a storage medium for the information processing apparatus.

### Description of the Related Art

In some information processing apparatus such as a PC, a browser is used to display on a display unit an operation screen provided by a server via a network.

Such an information processing apparatus requests the server to transmit screen data, and receives HTML data for displaying an operation screen from an application on the server. The browser of the information processing apparatus analyzes the received HTML data, and based on a description of the HTML data, displays the operation screen on the display unit.

When an instruction is input by a user through the operation screen, the browser notifies the user's instruction to the server, and the application on the server executes processing according to the instruction.

In some of recent MFPs (multi function peripherals) having a scanner, printer, etc., a browser is also used to cause a display unit to display an operation screen provided by a sever and accept a user's instruction input through the operation screen.

For example, Japanese Laid-open Patent Publication No. 2008-003833 proposes a technique for providing, from a server to an MFP, data of an operation screen for inputting an instruction for execution of an MFP function and a control script for controlling the MFP according to operations on the operation screen.

With this proposal, the control script read by the browser gives an instruction to execute processing based on an instruction input through the operation screen. The MFP creates a job corresponding to an MFP function to be executed by the control script.

The created job controls a scanner and a printer of the MFP, and requests a user to perform dialog processing such as inputting an instruction or eliminating an error. The control script receives the dialog processing and performs the next processing.

### SUMMARY OF THE INVENTION

The present invention enables realization of an information processing apparatus capable of preventing processing of a job, which is in execution, from being interrupted and preventing the job, which is being processed, from staying in the information processing apparatus, even if a user's screen transition operation is performed while the job is being executed, and enables realization of a control method and a storage medium for the information processing apparatus.

One aspect of the present invention provides an information processing apparatus comprising a display control unit configured to selectively display operation screens on a display unit according to a user's operation, the operation screens being provided from an external apparatus, a job processing unit configured to process a job according to a user's operation performed on an operation screen displayed on the display unit, and a determination unit configured to determine whether a job associated with the operation screen displayed on the display unit is in execution, wherein in a case where it is determined by the determination unit that the job is in execution when a user's screen changeover operation is accepted, the display control unit displays another operation screen on the display unit, without deleting information about the operation screen having been displayed up to that time on the display unit in association with the job.

Further features of the present invention will become apparent from the following description of exemplary embodiments with reference to the attached drawings.

### BRIEF DESCRIPTION OF THE DRAWINGS

FIG. 1 is a view showing an example of an information processing system including an MFP that is a first embodiment of an information processing apparatus according to this invention;

FIG. 2 is a block diagram showing an example structure of the MFP;

FIG. 3 is a block diagram showing an example structure of a server of the information processing system;

FIG. 4A is a block diagram showing an example software structure of the MFP;

FIG. 4B is a block diagram showing an example software structure of the server;

FIG. 5 is a sequence diagram showing a series of processing performed between a browser of the MFP, a service provider of the MFP, and a web application of the server;

FIG. 6 is a view showing an example of screen transition occurring on a display unit of the MFP during a series of processing performed to achieve an MFP function;

FIG. 7 is a view showing an example of a control script and HTML data for screen display;

FIG. 8 is a view showing an example screen displayed on the display unit by the browser;

FIG. 9 is a view showing an example of a screen information table managed by a screen management part of the browser;

FIG. 10 is a flowchart showing an example of a display control process in which the display of an operation screen on the display unit by the browser of the MFP is controlled;

FIG. 11 is a view showing a state where a newly created tab and an operation screen specified in the tab are displayed on the foreground;

FIG. 12 is a flowchart showing an example of a display control process in an MFP, which is a second embodiment of the information processing apparatus of this invention; and

FIG. 13 is a flowchart showing an example of a display control process in an MFP, which is a third embodiment of the information processing apparatus of this invention.

### DESCRIPTION OF THE EMBODIMENTS

Embodiments of the present invention will now be described in detail with reference to the drawings. It should be noted that the relative arrangement of the components, the numerical expressions and numerical values set forth in these embodiments do not limit the scope of the present invention unless it is specifically stated otherwise.

### (First Embodiment)

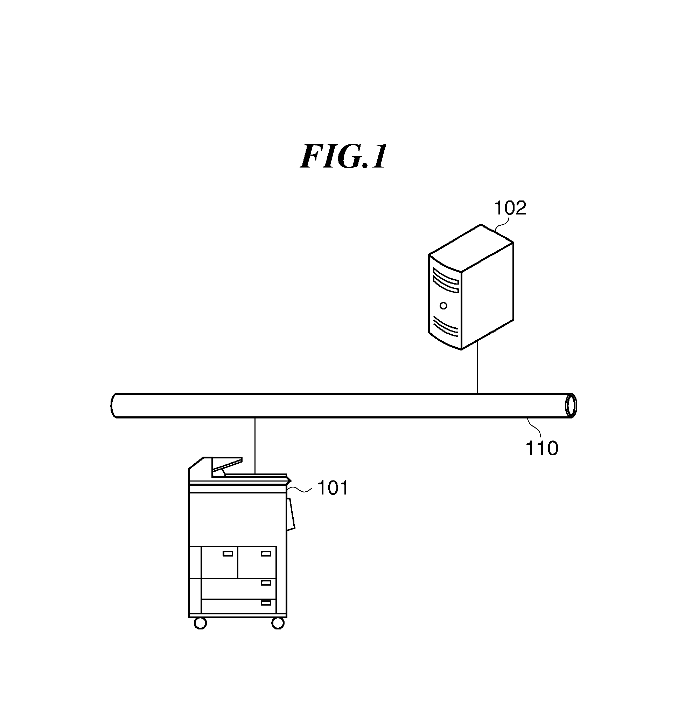

FIG. 1 shows an example of an information processing system including an MFP that is a first embodiment of an information processing apparatus of this invention.

As shown in FIG. 1, the MFP 101 of this embodiment is connected for communication with a web server 102 through a network 110, which is implemented by, e.g., a LAN.

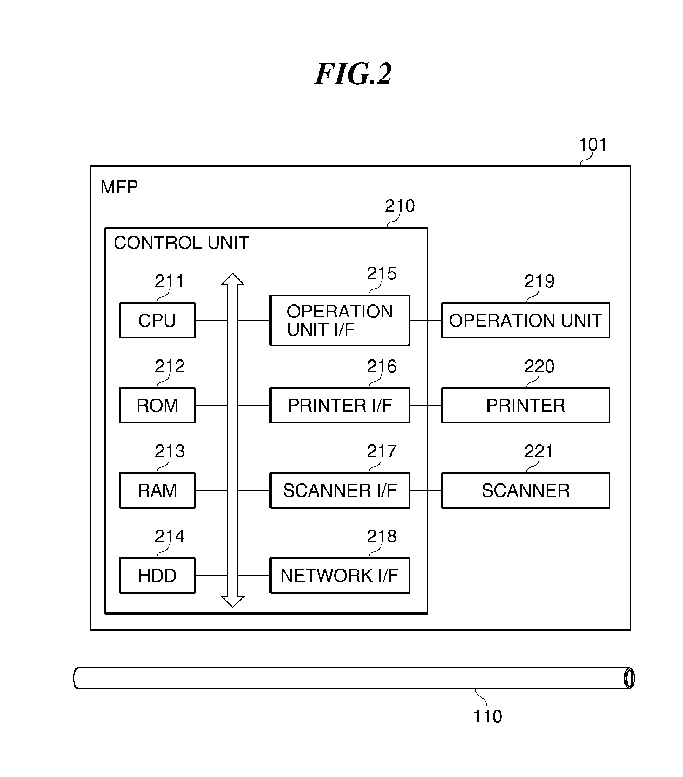

FIG. 2 shows in block diagram an example structure of the MFP 101. As shown in FIG. 2, the MFP 101 has a control unit 210 that includes a CPU 211, ROM 212, RAM 213, HDD 214, operation unit I/F 215, printer I/F 216, scanner I/F 217, and network I/F 218.

The CPU 211 reads a control program stored in the ROM 212 into the RAM 213, and based on the control program, executes scanner reading control, transmission control, etc., thereby controlling operations of the entire MFP 101. The RAM 213 is used by the CPU 211 as a main memory and a temporary storage region such as a work area. The HDD 214 stores image data, various programs, and various information tables (described later).

The operation unit I/F 215 is an interface for connection with an operation unit 219 provided with, e.g., a keyboard and a liquid crystal display unit having a touch panel function. The MFP 101 has a web browser function (described later). A browser of the MFP 101 analyzes HTML data provided from the server 102 and causes the display unit of the operation unit 219 to display an operation screen based on the analyzed HTML data.

The printer I/F 216 is an interface for connection with a printer 220. Image data is transferred to the printer 220 via the printer I/F 216 and printed on a sheet by the printer 220.

The scanner I/F 217 is an interface for connection with a scanner 221 that reads an image of an original. The scanner 221 creates image data, and outputs the image data to the control unit 210 via the scanner I/F 217.

The network I/F 218 is an interface through which the MFP 101 is connected to the network 110. The network I/F 218 transmits image data and information to an external apparatus (e.g., server 102) connected to the network 110, and receives information from the external apparatus.

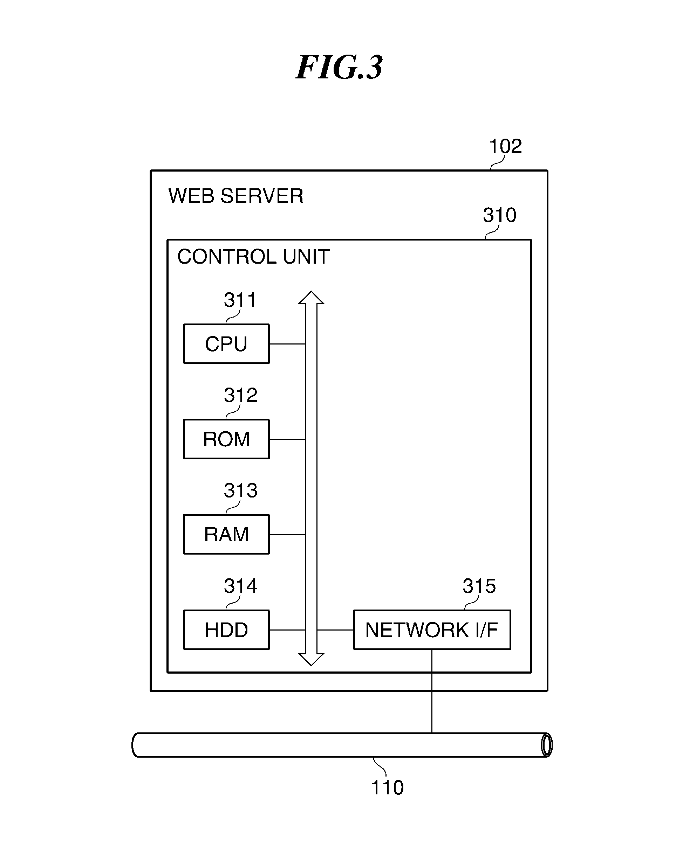

FIG. 3 shows in block diagram an example structure of the server 102. As shown in FIG. 3, the server 102 has a control unit 310 including a CPU 311, ROM 312, RAM 313, HDD 314, and network I/F 315.

The CPU 311 reads and executes a control program stored in the ROM 312 to control the entire server 102. The RAM 313 is used by the CPU 311 as a main memory and a temporary storage region such as a work area. The HDD 314 stores image data, programs, and information tables (described later).

The network I/F 315 is an interface for connection with the network 110, and transmits and receives various information to and from the MFP 101 or other apparatuses connected to the network 110.

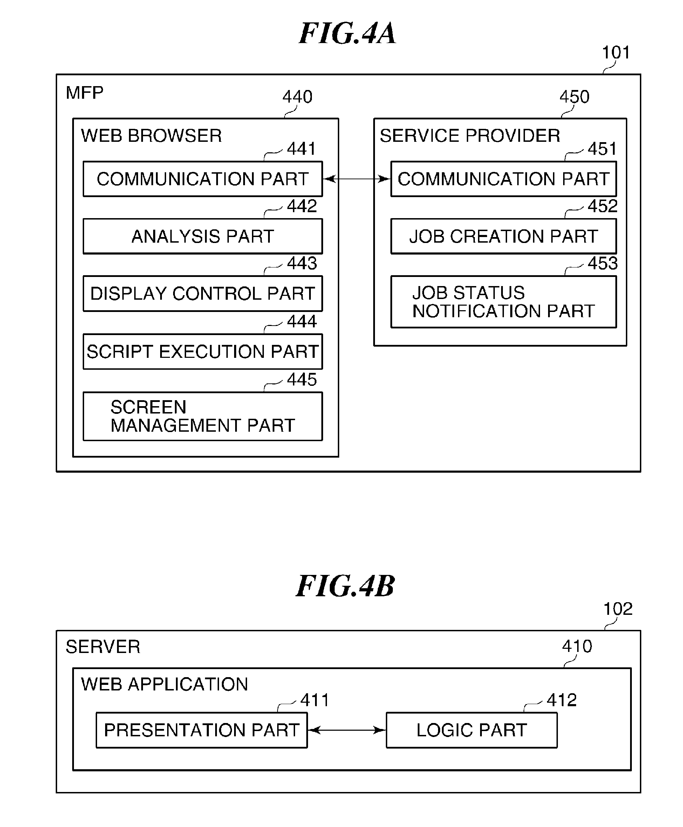

FIG. 4A shows in block diagram an example software structure of the MFP 101.

As shown in FIG. 4A, the MFP 101 includes a web browser 440 and a service provider 450.

The browser 440 has a communication part 441, analysis part 442, display control part 443, script execution part 444, and screen management part 445.

The communication part 441 communicates with a presentation part 411 of a web application 410 (described later) of the server 102 according to HTTP protocol. More specifically, the communication part 441 transmits to the web application 410 a request message requesting the web application 410 to transmit data used by the browser 440 to display an operation screen, and receives a response message from the web application 410.

Further, the communication part 441 transmits to a communication part 451 of the service provider 450 a request message requesting execution of a function, and receives a response message from the service provider 450.

The analysis part 442 analyzes the response message received from the web application 410 of the server 102. The response massage includes HTML data and a control script. The HTML data contains a description indicating the contents of an operation screen to be displayed on the display unit of the operation unit 219 by the browser 440. The control script contains a description indicating the contents of control to be executed to achieve a function of the MFP 101.

Based on a result of HTML data analysis by the analysis part 442, the display control part 443 causes the display unit of the operation unit 219 to display an operation screen. The display control part 443 is able to cause the display unit of the operation unit 219 to display a screen, which is selected from operation screens by a tab.

The script execution part 444 performs processing based on a result of control script analysis by the analysis part 442. The control script contains a code for giving an instruction to control a function of the MFP 101 to the service provider 450, and a code for performing processing (such as updating an operation screen) in response to a response from the service provider 450.

The screen management part 445 manages an operation screen, which is displayed on the display by the display control part 443, in association with a job executed by the service provider 450 according to an instruction given by the script execution part 444.

The service provider 450 includes a communication part 451, job creation part 452, and job status notification part 453.

The communication part 451 receives from the communication part 441 of the browser 440 a request message that requests generation of a job. The job creation part 452 analyzes the request message received by the communication part 451, and based on a result of the analysis, generates and executes a job for executing the requested processing.

The job status notification part 453 monitors an execution status of the job executed by the job creation part 452, and notifies the communication part 451 of a job execution status when a change occurs in the job execution status. The communication part 451 transmits to the communication part 441 of the browser 440 the job execution status notified from the job status notification part 453.

FIG. 4B shows in block diagram an example software structure of the server 102.

As shown in FIG. 4B, the web application 410 of the server 102 includes the presentation part 411 and a logic part 412.

The presentation part 411 communicates with the communication part 441 of the browser 440 of the MFP 101, receives a request message from the browser 440, notifies the received request message to the logic part 412, and waits for reception of a response from the logic part 412. Based on the request message notified from the presentation part 411, the logic part 412 generates HTML data corresponding to an operation screen to be displayed on the display unit and a control script for the processing to be executed by the MFP 101. The presentation part 411 receives from the logic part 412 the HTML data and the control script and transmits a response message including the HTML data and the control script to the browser 440.

Based on the received control script, the MFP 101 causes the printer 220 to perform printing and causes the scanner 221 to perform reading, or causes the network I/F 218 to perform transmission processing, for example.

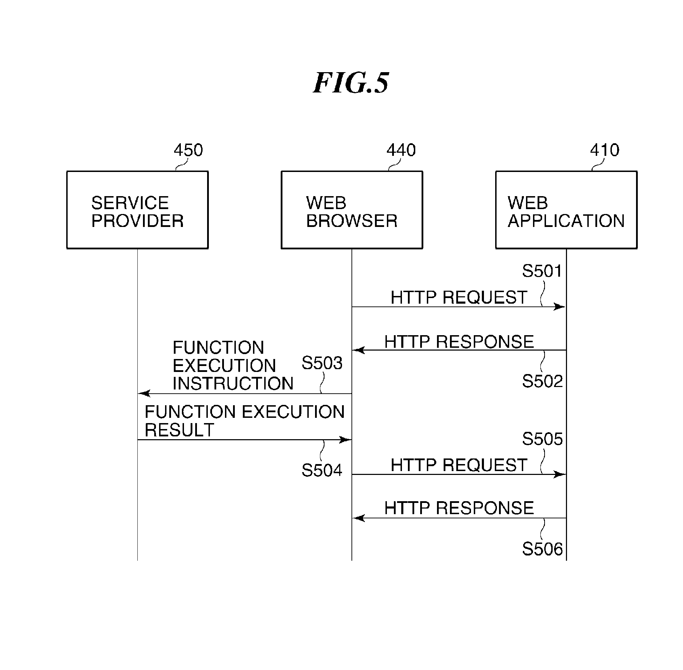

Next, with reference to FIG. 5, a description will be given of a series of processing performed between the browser 440 of the MFP 101, the service provider 450 of the MFP 101, and the web application 410 of the server 102.

When the browser 440 is activated by a user, the browser 440 sends an HTTP request to the web application 410 in step S501 in FIG. 5.

In step S502, based on the received HTTP request, the web application 410 generates HTML data corresponding to an operation screen to be displayed on the display unit by the browser 440 and a control script to be executed by the browser 440, and delivers to the browser 440 an HTTP response including the HTML data and the control script.

In a case, for example, that the received HTTP request corresponds to an operation screen used for scan execution, the web application 410 delivers to the browser 440 an HTTP response including HTML data for displaying a scan screen and a control script for executing scanning.

In step S503, the browser 440 analyzes the HTML data received from the web application 410 and causes the display unit to display an operation screen. The browser 440 also analyzes the control script received from the web application 410 and instructs the service provider 450 to execute a function of the MFP 101.

In step S504, the service provider 450 executes the function of the MFP 101 according to the instruction given by the browser 440 in step S503, and notifies the browser 440 of an execution result.

In step S505, the browser 440 causes the control script to process the execution result notified from the service provider 450 in step S504, to thereby perform processing according to the execution result.

In this example, the browser 440 again delivers an HTTP request to the web application 410 according to the notified execution result. In a case, for example, that the notified execution result indicates completion of the processing, the browser 440 delivers an HTTP request to display a processing completion screen. In a case that the notified execution result indicates some error, the browser 440 delivers an HTTP request to display an error processing screen.

In step S506, based on the contents of the HTTP request delivered from the browser 440 in step S505, the web application 410 generates a control script and HTML data corresponding to an operation screen, and delivers to the browser 440 an HTTP response including the HTML data and the control script. The above-described processing is repeated, whereby a series of processing is executed to achieve a function of the MFP 101.

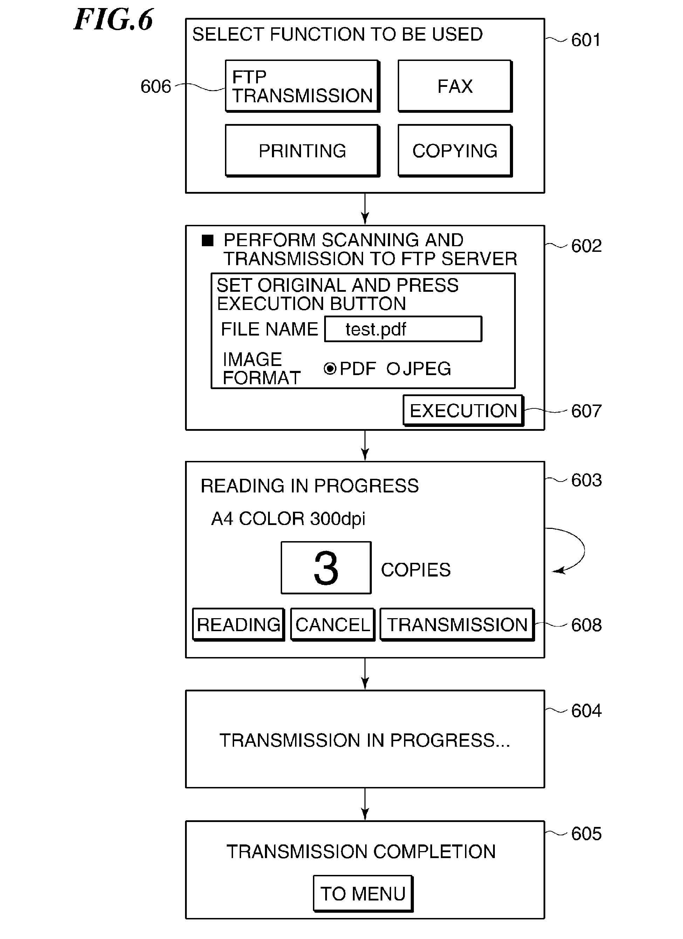

FIG. 6 shows an example of screen transition occurring on the display unit during a series of processing performed to achieve a function of the MFP 101.

In this embodiment, a menu screen 601, FTP transmission setting screen 602, scan screen 603, transmission-in-progress screen 604, and transmission completion screen 605 are displayed in this order on the display unit by the browser 440 according to user's operations and the control script, as shown in FIG. 6.

The menu screen 601 is for selecting which function of the MFP 101 is to be used. When a desired function is selected on the menu screen 601 by the user, a transition is made to a screen corresponding to the selected function.

The FTP transmission setting screen 602 is displayed on the display unit when an FTP transmission button 606 is pressed on the menu screen 601 by the user to select an FTP transmission function. On the screen 602, a setting of FTP transmission is performed and an instruction for execution of the FTP transmission function is given.

The scan screen 603 is displayed in a state where the FTP transmission function is being executed when an execution button 607 is pressed by the user on the FTP transmission setting screen 602. In that state, a scan job is controlled by the control script, whereby originals are continuously read.

The transmission-in-progress screen 604 is displayed in a state where image data of scanned originals is being transmitted to an FTP server when a transmission button 608 is pressed by the user on the scan screen 603.

The transmission completion screen 605 is displayed when the transmission of the image data to the FTP server is completed.

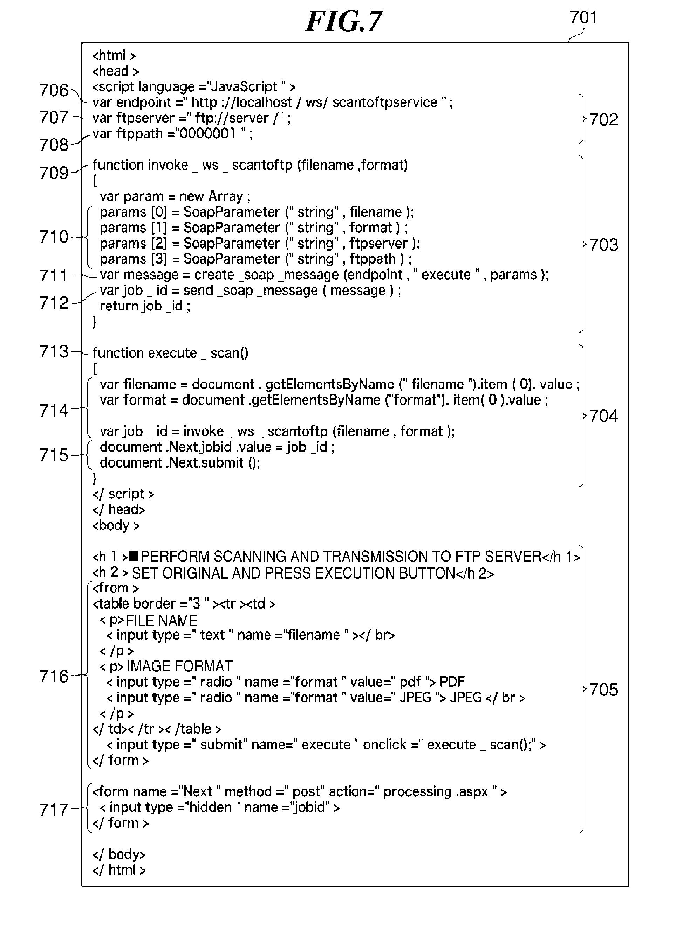

FIG. 7 shows an example of a control script and HTML data for screen display. In the example of FIG. 7, there is shown data 701 that includes a control script and HTML data corresponding to the FTP transmission setting screen 602. The data 701 is created by the server 102 in response to a request from the MFP 101.

As shown in FIG. 7, the data 701 is divided into blocks 702 to 705, which are described below.

The block 702 is set with a part of parameters, which are used by the web application 410 to perform FTP transmission. An endpoint variable 706 is set with URL information according to which a request is delivered to the service provider 450. An ftpserver variable 707 is set with a URL of the FTP server to which data is transmitted. An ftppath variable 708 is set with a path to the FTP server that stores the data.

In the block 703, processing for calling the service provider 450 is written. The service provider 450 is called by using SOAP in this example. An invoke_ws_scantoftp function 709 is defined. A SoapParameter function 710 is a function for generating parameters in SOAP form. In this example, a file name, file format, transmission destination FTP server, and storage destination path for FTP transmission are set as string type data.

A create_soap_message function 711 generates a SOAP message that gives an execution instruction to the endpoint. A send_soap_message function 712 transmits a SOAP request to the service provider 450. A job_id variable represents a job ID that uniquely identifies an FTP transmission job and that is sent back from the endpoint in reply to the SOAP request.

In the block 704, an execute_scan function 713 is defined. Calling processing 714 is executed by executing the invoke_ws_scantoftp function 709 that includes, as parameters, a file name and a file format for FTP transmission, which are input by a user. While using as a parameter a job ID obtained as a result of execution of the invoke_ws_scantoftp function 709, processing 715 is performed to instruct execution of request processing for acquisition of the next screen data.

In the block 705, contents of a screen to be displayed on the display unit by the browser 440, a user input form 716, and a form 717 to make an HTTP request for the next screen are defined. With the user input form 716, it is possible, for example, to input a file name for FTP transmission and select a file format for FTP transmission. The execute_scan function 713 is called when the execution button is pressed.

When an execution instruction is given by the processing 715 in the block 704, the form 717 is executed to make a POST request to processing.aspx, while using the job ID as a parameter. The processing.aspx represents a URI of the scan screen 603. The job ID is used by the control script for the scan screen 603 to designate a job that executes, e.g., processing to continuously read originals.

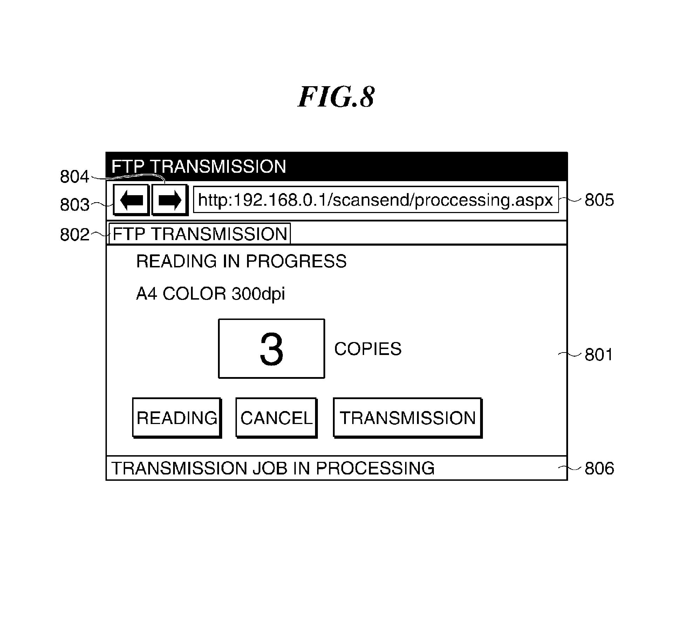

Next, with reference to FIG. 8, a description will be given of an example of a tab control process performed by the browser 440. FIG. 8 shows an example screen displayed on the display unit by the browser 440.

In FIG. 8, reference numeral 801 denotes a screen for displaying received HTML data. It is assumed in this embodiment that the screen 801 is an operation screen for operating the MFP 101. A tab control 802 is a GUI for making an operation screen changeover. The browser 440 is able to hold plural types of operation screens, and the tab control 802 is used to select an operation screen displayed on the screen 801 from among the plural types of operation screens.

In the following description, the expression "the operation screen (or tab) is displayed on the foreground" will refer to making a changeover to the operation screen (or tab), and the expression "the operation screen is displayed on the background" will refer to that the operation screen is no longer displayed.

A return button 803 is a button to make a changeover from the operation screen currently displayed on the foreground to the immediately preceding screen. A proceed button 804 is a button to return from the screen after the changeover, which is displayed by operating the return button 803, to the screen before the changeover. An address field 805 displays a URL of the currently displayed screen.

Also, by directly inputting a URL into the address field 805, the screen display can be changed and an HTTP request can be delivered to the input URL. Each of the return button 803, proceed button 804, and address field 805 is operable independently of the screen 801. A status bar 806 displays an execution state of a job which is being processed by the control script.

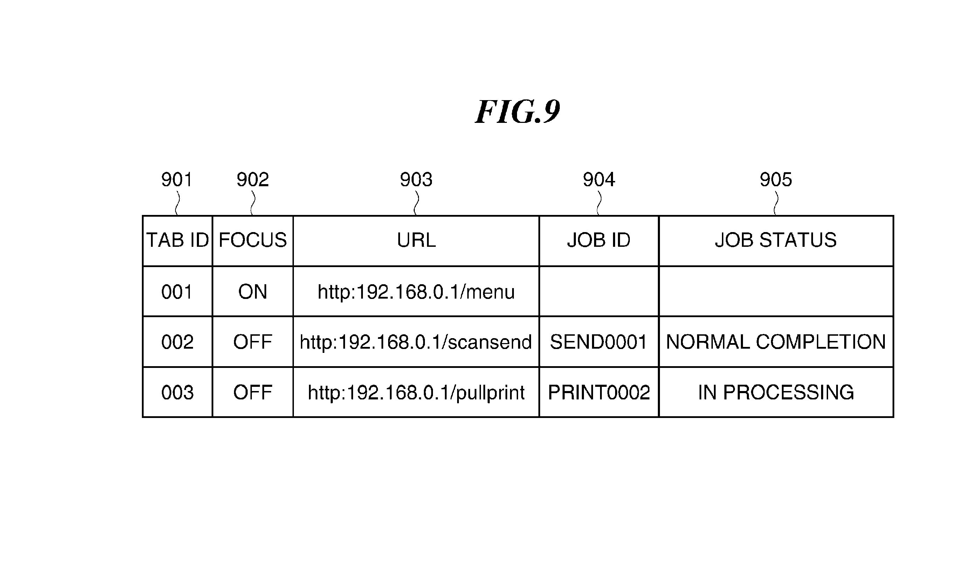

FIG. 9 shows an example of a screen information table managed by the screen management part 445 of the browser 440.

The screen management part 445 uses the screen information table to manage operation screens in association with jobs executed by control scripts. The screen information table includes one or more tabs (records) each including, as attributes, a tab ID 901, focus 902, URL 903, job ID 904, and job status 905.

The tab ID 901 is information that uniquely identifies a tab that is used to display (specify) a corresponding one of the operation screens held by the browser 440. The focus 902 represents a display state of the tab identified by the tab ID 901 or represents a display state of the operation screen corresponding to the tab. The focus 902 has a value of ON, if the tab or the corresponding operation screen is displayed on the foreground and a user's input operation can be made on the tab or on the screen. The focus 902 has a value of OFF, if the tab or the corresponding operation screen is displayed on the background and a user's input operation cannot be made thereon.

The URL 903 represents a URL of HTML data and control script, which correspond to the tab identified by the tab ID 901. The job ID 904 is information that uniquely identify a job, which is generated by the tab identified by the tab ID 901 (more specifically, which is generated by the control script corresponding to the tab).

The job status 905 represents an execution state of the job identified by the job ID 904. The job status 905 records an "in-processing" state if the job is being executed (processed), records a "normal completion" state if the job has normally been completed, records an "abnormal completion" state if the job has abnormally been completed, and records a "cancel" state if the job has been canceled and completed.

When the execution state of the job changes, data of the job ID 904 and data of job status 905 are notified from the job status notification part 453 of the service provider 450.

According to a user's operation on the operation screen displayed on the display unit by the browser 440, the screen management part 445 adds, updates, or deletes the tab ID 901, focus 902, and URL 903. According to the control script (identified by the URL 903) being processed, the screen management part 445 updates the job ID and job status 905 notified from the job status notification part 453.

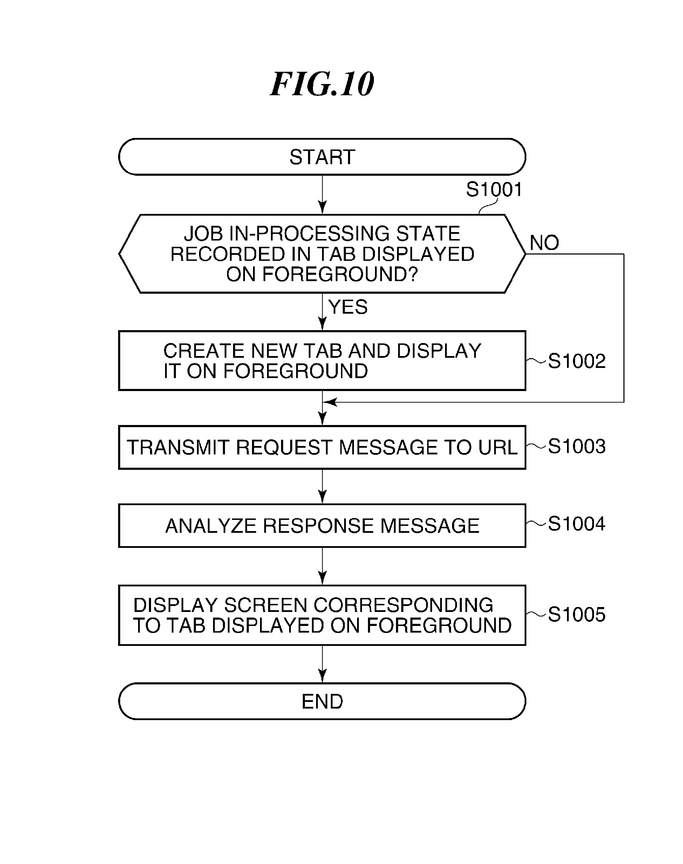

Next, with reference to FIG. 10, a description will be given of an example of a display control process in which the display of an operation screen on the display unit by the browser 440 of the MFP 101 is controlled. The display control process is performed by the CPU 211 by loading a control program stored in the ROM 212 or the HDD 214 of the MFP 101 into the RAM 213 and by executing the loaded control program.

The CPU 211 starts the display control process when a display screen changeover is requested by a user's operation on the display screen 801, the return button 803, the proceed button 804, or the address field 805 shown in FIG. 6.

In step S1001, the CPU 211 causes the screen management part 445 to confirm the screen information table (see FIG. 9), and determines whether a job "in-processing" state is recorded in the job status 905 of a tab, which is displayed on the foreground. If the job status 905 represents the "in-processing" state, the CPU 211 proceeds to step S1002. If the job status 905 does not represent the "in-processing" state, the CPU 211 proceeds to step S1003.

In step S1002, the CPU 211 causes the screen management part 445 to create a new tab, display the new tab on the foreground, and set the focus 902 of the new tab to a value of ON. The CPU 211 also causes the screen management part 445 to display a tab on the background, which has been displayed on the foreground up to that time, and change the focus 902 of the tab from a value of ON to OFF. Then, the process proceeds to step S1003 . With step S1002, the control script is not interrupted since the new tab is created and a new operation screen can be generated and displayed, without closing an operation screen specified by the tab having been displayed on the foreground up to that time.

In step S1003, the CPU 211 causes the communication part 441 to transmit a request message to a specified URL of the presentation part 411 of the server 102. When the communication part 441 receives a response message from the server 102, the CPU 211 proceeds to step S1004.

In step S1004, the CPU 211 causes the analysis part 442 to analyze the response message received in step S1003 and acquire HTML data to be displayed on the display unit. Then, the CPU 211 proceeds to step S1005.

In step S1005, based on the HTML data acquired by the display control part 443 in step S1004, the CPU 211 causes a screen, which corresponds to the tab displayed on the foreground, to be displayed, whereupon the display control process is completed.

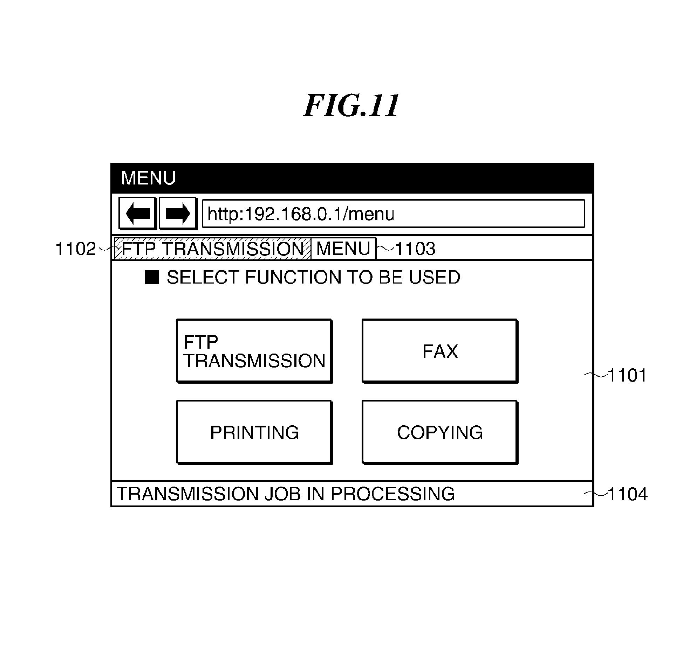

FIG. 11 shows a state where a new tab is displayed on the foreground and a screen specified by the new tag is displayed. The illustrated state is obtained by the processing in steps S1002 to S1005 in a case where it is determined in step S1001 that the job "in-processing" state is recorded in the new tab displayed on the foreground. It is assumed here that a screen transition from the scan screen 603 to the menu screen 601 shown in FIG. 6 is instructed.

In that case, as a result of the processing in step S1002, the scan screen 603 is displayed on the background and is not displayed on a display screen 110 shown in FIG. 11. As a result of the processing in step S1005, the menu screen 601 is displayed on the display screen 1101. When the job status 905 is in the "in-processing" state, information representing that the job is being processed is displayed on a status bar 1104 by the browser 440.

To display the scan screen 603 on the display screen 1101, a tab control 1102 is selected. If a tab control 1103 is selected in a state where the scan screen 603 is displayed on the display screen 1101, a changeover to the menu screen 601 takes place. To complete the job execution, the tab control 1102 is selected and the screen is switched.

As described above, in this embodiment, when a screen transition operation is performed by the user in a state that the browser 440 of the MFP 101 is processing a control script to execute a job, control is made to perform the screen display based on a newly created tab. As a result, the processing of the job which is in execution can be prevented from being interrupted. Even if the job is stopped while waiting for a user's input or while being in an error state, the job whose execution cannot be continued can be prevented from staying in the MFP 101.

In the embodiment, the browser 440 causes the tab control 802 to be displayed, thereby enabling the user to perform a tab changeover operation. However, it is not inevitably necessary to display the tab control 802. Also, it is not inevitably necessary to display the return button 803, proceed button 804, and address field 805. In that case, the browser 440 accepts a screen transition instruction through a GUI on the display screen or through a hyper-link operation.

In the embodiment, it is determined in step S1001 of FIG. 10 whether the job is being processed. Alternatively, it is possible to determine whether the job has abnormally been completed. An error recovery operation at the time of abnormal completion can be accepted on a job processing screen.

In the embodiment, a case has been described by way of example in which tabs are used to hold a plurality of operation screens, but this is not limitative. It is possible, for example, to create and manage a plurality of browser windows corresponding to respective ones of operation screens. In that case, the screen management part 445 manages URLs, job IDs, and job statuses by using, e.g., process IDs that identify the browser windows, instead of using the tab IDs 901.

In the embodiment, an operation screen is displayed on the background so that the operation screen is no longer displayed, but this is not limitative. It is possible, for example, to perform the screen display control such that at least part of the operation screen is not displayed, or to display an icon in the status bar 1104 or in other screen region. It is also possible to overlappingly display an operation screen whose focus is set to ON on an operation screen whose focus is set to OFF.

### (Second Embodiment)

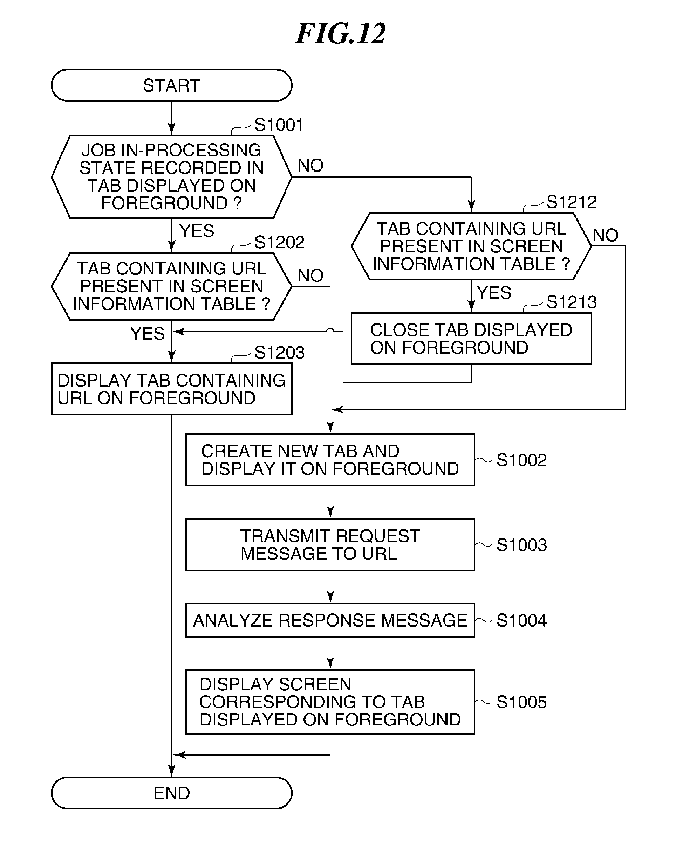

Next, with reference to FIG. 12, a description will be given of an MFP which is a second embodiment of the information processing apparatus of this invention. Like elements which are the same or similar to those of the first embodiment are denoted by like numerals.

FIG. 12 shows in flowchart an example of a display control process in which the display of an operation screen on the display unit by the browser 440 of the MFP 101 is controlled. The display control process shown in FIG. 12 is performed by the CPU 211 by loading a control program stored in the ROM 212 or the HDD 214 of the MFP 101 into the RAM 213 and executing the loaded control program.

In step S1001, the CPU 211 causes the screen management part 445 to confirm the screen information table, and determines whether the job status 905 of a tab whose focus 902 is set to ON and which is displayed on the foreground represents that a corresponding job is in an "in-processing" state. The CPU 211 proceeds to step S1202 if the job status 905 represents the "in-processing" state, and proceeds to step S1212 if the job status 905 does not represent the "in-processing" state.

In step S1202, the CPU 211 causes the screen management part 445 to determine whether a tab containing a specified URL is present in the screen information table. The CPU 211 proceeds to step S1203 if there is a tab containing the specified URL in the screen information table, and proceeds to step S1002 if there is no tab containing the specified URL in the table. Since the processing performed in steps S1002 to S1005 is the same as that described in the first embodiment, a description of the processing is omitted.

In step S1203, the CPU 211 performs control to display the tab corresponding to the specified URL on the foreground, and completes the display control process.

In step S1212, the CPU 211 causes the screen management part 445 to determine whether there is a tab containing a specified URL in the screen information table. The CPU 211 proceeds to step S1213 if there is a tab containing the specified URL in the screen information table, and proceeds to step S1002 if there is no tab containing the specified URL in the table.

In step S1213, the CPU 211 causes the tab (which is displayed on the foreground and has its focus 902 set to ON) not to be displayed, and deletes from the screen information table the screen information of the tab caused not to be displayed, whereupon the CPU 211 proceeds to step S1203.

In step S1203, the CPU 211 causes the screen management part 445 to display the tab containing the specified URL on the foreground and set the focus 902 of the tab to ON in the screen information table, whereupon the display control process is completed.

As described above, in this embodiment, when the browser 440 accepts a screen transition instruction, if there is a tab which has been switched to be displayed on the background for the reason that the corresponding job is being processed, such tab is switched to be displayed on the foreground. As a result, it becomes possible to prevent the same operation screen from being displayed in association with a plurality of tabs. When an operation screen corresponding to the job which is being processed is switched to be displayed on the foreground, the information about another screen which has been displayed on the foreground up to that time is deleted from the screen information table. As a result, it becomes possible to prevent the increase of operation screens which are not used by the user, and therefore the consumed memory capacity can be reduced. The second embodiment is the same in other construction, functions, and advantages as those of the first embodiment.

### (Third Embodiment)

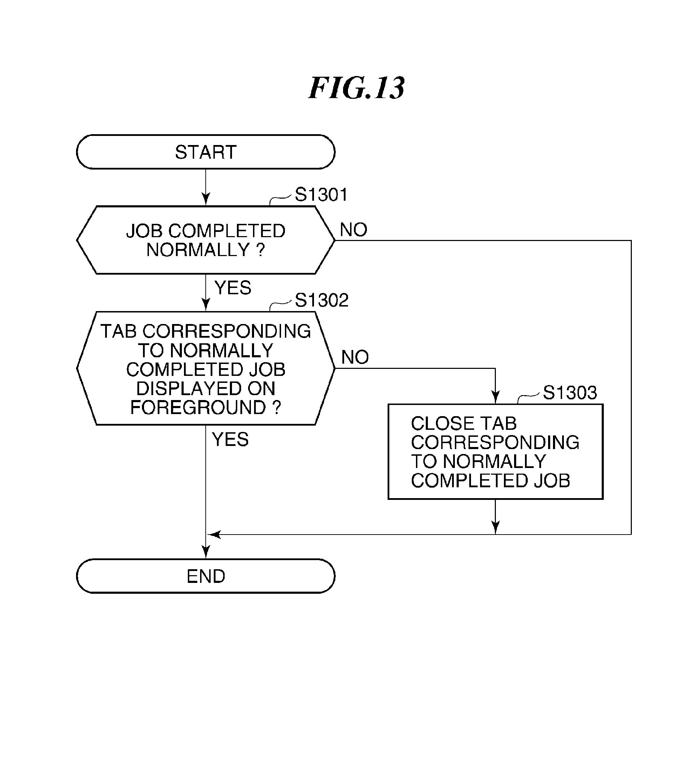

Next, with reference to FIG. 13, a description will be given of an MFP which is a third embodiment of the information processing apparatus of this invention. Like elements which are the same or similar to those of the first embodiment are denoted by like numerals.

FIG. 13 shows in flowchart an example of a display control process in which the display of an operation screen on the display unit by the browser 440 of the MFP 101 is controlled. The display control process shown in FIG. 13 is executed by the CPU 211 by loading a control program stored in the ROM 212 or the HDD 214 of the MFP 101 into the RAM 213 and executing the loaded control program.

In this embodiment, the CPU 211 starts the display control process when a job execution status is notified to the browser 440 from the job status notification part 453 of the service provider 450.

In step S1301, the CPU 211 causes the screen management part 445 to confirm the job execution state notified from the job status notification part 453, and determines whether the job execution state is the "normal completion" state. The CPU 211 proceeds to step S1302 if the job execution state is the "normal completion" state, and completes the display control process if the job execution state is other than the "normal completion" state.

In step S1302, the CPU 211 causes the screen management part 445 to confirm the focus 902 of the tab, which corresponds to the job that is in the "normal completion" state, based on the screen information table. If the focus 902 of the tab is set to ON, i.e., if the tab is displayed on the foreground, the CPU 211 completes the display control process. If the focus 902 of the tab is set to OFF, i.e . , if the tab is displayed on the background, the CPU 211 proceeds to step S1303.

In step S1303, the CPU 211 causes the screen management part 445 to close the tab and delete the screen information of the closed tab from the screen information table, whereupon the screen display control is completed.

As described above, in this embodiment, a tab which has been switched to be displayed on the background for the reason that the corresponding job is being processed is immediately closed when the job is completed. Thus, it becomes possible to prevent the memory from being consumed by the tab not used by the user. The third embodiment is the same in other construction, functions, and advantages as those of the first embodiment.

### (Other Embodiments)

Aspects of the present invention can also be realized by a computer of a system or apparatus (or devices such as a CPU or MPU) that reads out and executes a program recorded on a memory device to perform the functions of the above-described embodiments, and by a method, the steps of which are performed by a computer of a system or apparatus by, for example, reading out and executing a program recorded on a memory device to perform the functions of the above-described embodiments. For this purpose, the program is provided to the computer for example via a network or from a recording medium of various types serving as the memory device (e.g., computer-readable medium).

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.
An information processing apparatus capable of preventing processing of a job which is in execution from being interrupted, even if a user's screen transition operation is performed while the job is being executed and capable of preventing the job which is being processed from staying in the information processing apparatus. If it is determined that a job is in an in-processing state (YES to S1001) when a user's screen changeover operation is accepted, a browser of the information processing apparatus causes a display unit to display, on the foreground, an operation screen other than an operation screen associated with the job (S1002 to S1005).

## Claims

1. An information processing apparatus (101) comprising:
a display control unit (443) configured to selectively display operation screens on a display unit (219) according to a user's operation, the operation screens being provided from an external apparatus (102);
a job processing unit (452) configured to process a job according to a user's operation performed on an operation screen displayed on the display unit; and
a determination unit (445) configured to determine whether a job associated with the operation screen displayed on the display unit is in execution,
wherein in a case where it is determined by said determination unit (445) that the job is in execution when a user's screen changeover operation is accepted, said display control unit (443) displays another operation screen on the display unit, without deleting information about the operation screen having been displayed up to that time on the display unit in association with the job.

2. The information processing apparatus according to claim 1, wherein in a case where it is determined, when a user's screen changeover operation is accepted, that a transition destination operation screen has been once selected, said display control unit (443) displays the transition destination operation screen on the display unit.

3. The information processing apparatus according to claim 1, wherein said determination unit (445) further determines whether the job in execution is completed, and
in a case where it is determined by said determination unit (445) that the job in execution is completed, said display control unit (443) determines whether an operation screen corresponding to the job determined as being completed is displayed on the display unit, and deletes information about the operation screen determined as not being displayed on the display unit.

4. A control method for an information processing apparatus (101), comprising:
selectively displaying a plurality of operation screens on a display unit (219) according to a user's operation, the operation screens being provided from an external apparatus (102);
processing a job according to a user's operation performed on an operation screen displayed on the display unit; and
determining whether a job associated with the operation screen displayed on the display unit is in execution (S1001),
wherein in a case where it is determined, when a user's screen changeover operation is accepted, that the job is in execution, another operation screen is displayed on the display unit (S1002 to S1005), without deleting information about the operation screen having been displayed up to that time on the display unit in association with the job.

5. A non-transitory computer-readable storage medium storing a program for causing a computer to execute the control method as set forth in claim 4.
